# EUROPEAN PATENT APPLICATION

(11) **EP 4 071 179 A1**
(43) Date of publication of application: **12.10.2022**
(21) Application number: 20895168.1
(22) Date of filing: 24.11.2020
(51) Int. Cl.: C08B 37/00

(54) **PURIFICATION METHOD FOR BETA-1, 3-GLUCAN ESTER DERIVATIVE**

(30) Priority: 04.12.2019 JP 2019219838
(71) Applicant: LIXIL Corporation, Koto-ku Tokyo 136-8535 (JP); The University of Tokyo, Bunkyo-ku, Tokyo 113-8654 (JP)
(72) Inventor: UTSUNO Sayaka, Tokyo 136-8535 (JP); TANAKA Jun, Tokyo 136-8535 (JP); IWATA Tadahisa, Tokyo 113-8654 (JP)
(74) Representative: Grünecker Patent- und Rechtsanwälte PartG mbB
(86) International application number: PCT/JP2020/043556
(87) International publication number: WO 2021/111917

(57) **Abstract**

The present invention provides a method for purifying a β-1,3-glucan ester derivative, said method being capable of controlling a precipitation state of a purified product. In a precipitation step, a reprecipitation solvent is prepared based on the relationship between the HSP of a solvent containing a reprecipitation solvent and the HSP of a β-1, 3-glucan ester derivative. For example, the reprecipitation solvent is prepared so that distance Ra is from once to twice solubility sphere radius R0 of the β-1, 3-glucan ester derivative. Hence, the purified product is able to be formed into fine particles, this suppressing inclusion of impurities.

## Description

### TECHNICAL FIELD

The present disclosure relates to a method of purifying a β-1,3-glucan ester derivative.

### BACKGROUND ART

In recent years, technologies related to the production of bioplastics from microorganisms and plants have been proposed for environmental protection. Known examples of bioplastics produced from microorganisms are β-1,3-glucan ester derivatives obtained through esterification of at least some of the hydroxy groups in β-1,3-glucan with an acid. Proposed techniques for producing bioplastics from plants include a method of producing cellulose derivatives by replacing some of the hydrogen atoms of the hydroxy groups in cellulose with acyl groups (see, for example, Patent Document 1).

Patent Document 1: PCT International Publication No. WO2017/217502

### DISCLOSURE OF THE INVENTION

### Problems to be Solved by the Invention

Patent Document 1 discloses a method for collecting a reaction product by removing solvent from a reaction product solution containing dissolved cellulose derivatives as reaction products by distillation or filtration under reduced pressure. Patent Document 1 also discloses a method for collecting a precipitate product obtained by adding a poor solvent to the reaction solution.

The method for removing solvent from the reaction product solution by distillation or filtration under reduced pressure may suffer from low product quality due to impurity inclusion during the solvent removal under reduced pressure or may suffer from low yield due to some of the product remaining in the solvent. The method including a poor solvent to the reaction product solution may suffer from a wide molecular weight distribution depending on the type or amount of the poor solvent selected or may suffer from low product quality due to impurity inclusion and aggregation.

It is an object of the present disclosure to provide a β-1,3-glucan ester derivative purifying method that enables control of the state in which the purified product is precipitated.

### Means for Solving the Problems

The present disclosure relates to a method of purifying a β-1,3-glucan ester derivative, the method including a precipitation step for mixing a reprecipitation solvent and a synthetic reaction liquid containing a β-1,3-glucan ester derivative produced by esterification of at least some of the hydroxy groups in a β-1,3-glucan with an acid, wherein the reprecipitation solvent is prepared based on the relationship between the Hansen solubility parameter of the reprecipitation solvent and a solubility sphere for the Hansen solubility parameter of the β-1,3-glucan ester derivative.

### BRIEF DESCRIPTION OF THE DRAWINGS

FIG. 1 is a diagram schematically showing a solubility sphere and the Hansen solubility parameter (HSP) of solvents in the HSP space;
FIG. 2 is an optical microscope photograph of a purified product in Example 2 according to the present disclosure; and
FIG. 3 is an optical microscope photograph of a purified product in Example 2 according to the present disclosure; and
FIG. 4 is a photograph of a purified product in Example 3 according to the present disclosure.

### PREFERRED MODE FOR CARRYING OUT THE INVENTION

According to an embodiment of the present disclosure, a method of purifying a β-1,3-glucan ester derivative includes a precipitation step for mixing a reprecipitation solvent and a synthetic product liquid containing the β-1,3-glucan ester derivative, and a cooling step for lowering the temperature of at least one selected from the reprecipitation solvent and the synthetic reaction liquid. In addition to the steps mentioned above, the method may include a washing step for washing the precipitate obtained in the precipitation step.

### Precipitation Step

In an embodiment of the present disclosure, the precipitation step is a step for mixing a reprecipitation solvent and a synthetic reaction liquid containing a β-1,3-glucan ester derivative produced by esterification of at least some of the hydroxy groups in a β-1,3-glucan with an acid. In the precipitation step, the β-1,3-glucan ester derivative is precipitated or re-precipitated.

### β-1,3-Glucan Ester Derivative

In an embodiment of the present disclosure, the β-1,3-glucan ester derivative is preferably a curdlan ester derivative or a paramylon ester derivative. Both of Curdlan and paramylon are derived from microorganisms. These materials can be esterified to form ester derivatives, and microorganism-derived plastics can be produced using such ester derivatives. Curdlan and paramylon are each a type of polysaccharide, a β-1,3-glucan. Although derived from microorganisms, curdlan ester derivatives and paramylon ester derivatives have a strength similar to, for example, that of polypropylene (PP) and have high moldability.

Curdlan is a β-1,3-glucan, which is a polysaccharide with the structure represented by Chemical Formula (1) below and found in soil bacteria. Curdlan has a molecular weight of about 1,000,000 and is characterized by having high strength but low fluidity. A curdlan ester derivative having a structure represented by Chemical Formula (2) is obtained by esterifying at least some of the hydroxyl groups in curdlan with an acid as described in detail later. The esterification may be carried out using conventionally known techniques.

Paramylon is a β-1,3-glucan, which is a polysaccharide with the structure represented by Chemical Formula (1) below and found in euglena (green algae). Paramylon has a molecular weight of about 300,000 and is characterized by having high flowability but low strength. Like curdlan, a paramylon ester derivative having a structure represented by Chemical Formula (2) is obtained by esterifying at least some of the hydroxyl groups in paramylon with an acid as described in detail later. The esterification may be carried out using conventionally known techniques.

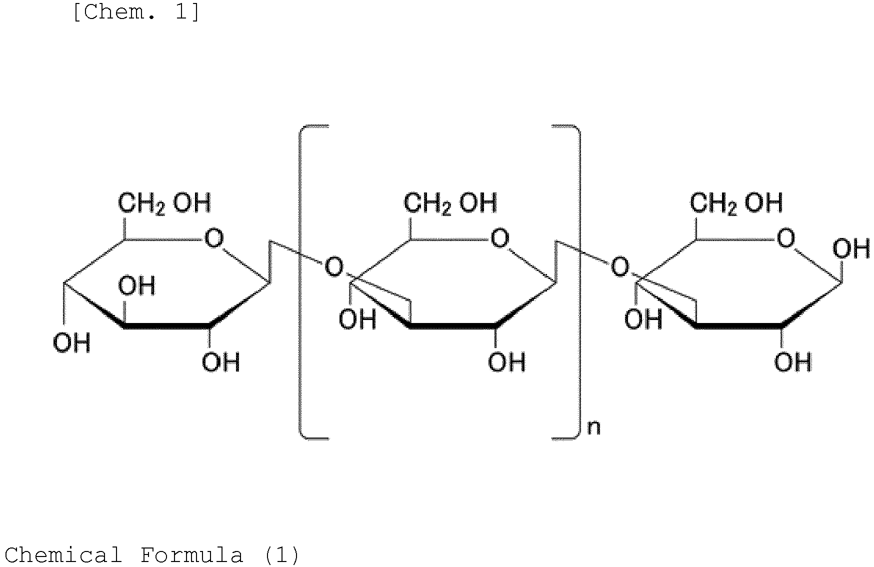

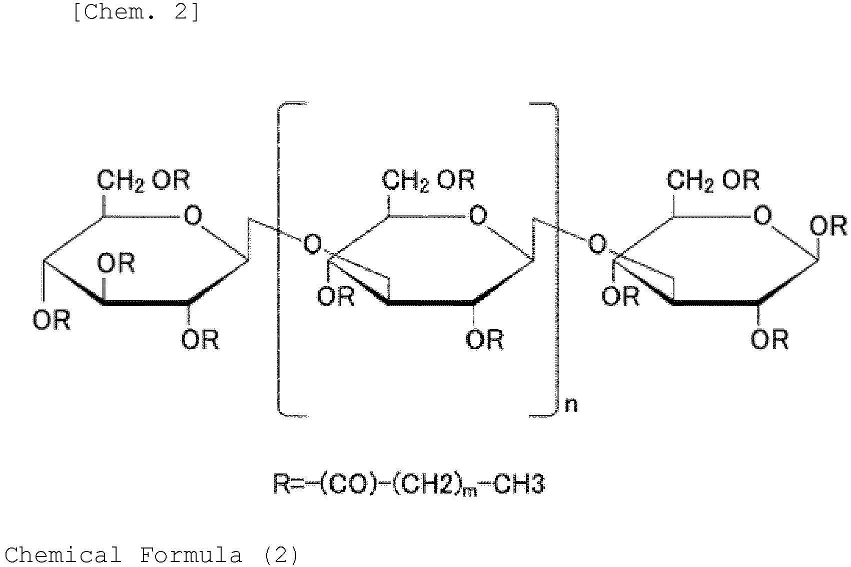

The acid used for the esterification is preferably an acid having 1 to 12 carbon atoms. The acid more preferably has 3 to 6 carbon atoms. A single acid may be used, or a combination of two or more acids may be used. For example, propionic acid and hexanoic acid are each preferably used, and a mixture of propionic acid and hexanoic acid is also preferably used. Specifically, a mixture of propionic acid and hexanoic acid (propionic acid : hexanoic acid = 1:1 to 2:1 in a volume ratio) is preferably used. The acid can also function as a solvent for the β-1,3-glucan ester derivative produced. The acid for the esterification may be used in combination with another acid for serving as the solvent. For example, trifluoroacetic acid may be used in combination. The β-1,3-glucan ester derivative dissolved in the acid is mixed with a reprecipitation solvent as the synthetic reaction solution.

### Reprecipitation Solvent

The reprecipitation solvent may consist of: a good solvent in which the β-1,3-glucan ester derivative has high solubility; and a poor solvent in which the β-1,3-glucan ester derivative has low solubility. In the precipitation step, the reprecipitation solvent may be mixed with the synthetic reaction liquid to obtain a precipitate including the β-1,3-glucan ester derivative. By making the reprecipitation solvent composed of a combination of a good solvent and a poor solvent, the HSP of the solvent described later can be easily adjusted by adjusting the mixing ratio between the good solvent and the poor solvent. In the precipitation step, the reprecipitation solvent is preferably added to and mixed with the synthetic reaction liquid. More preferably, the good solvent is added to the synthetic reaction liquid and dissolved in it, and then the poor solvent is added dropwise to the resulting solution. This prevents precipitation at the interface between the synthetic reaction liquid and the solvent and suppresses aggregation of precipitates. Moreover, the precipitation step can be performed in a single vessel.

The good solvent may be any solvent in which the β-1,3-glucan ester derivative is soluble. For example, the good solvent is preferably an alcohol such as methanol, or a ketone such as acetone. Additionally, when a washing step for washing the re-precipitated product is added, it is preferable to use a good solvent having a high ability to wash off the acid used for esterifying from the re-precipitated product. A single good solvent may be used, or a mixture of two or more good solvents may be used.

The poor solvent is such that the β-1,3-glucan ester derivative has low solubility in it and that the β-1,3-glucan ester derivative has lower solubility in it than at least in the good solvent. Specifically, the poor solvent is preferably water. A single poor solvent may be used, or a mixture of two or more poor solvents may be used.

In the precipitation step, the solvent for the β-1,3-glucan ester derivative may be composed of: the reprecipitation solvent composed of the good solvent and the poor solvent and the acid for esterifying remaining in the synthetic reaction liquid. The solvent for the β-1,3-glucan ester derivative may be prepared based on the relationship between the solubility sphere for the Hansen solubility parameter (hereinafter also referred to as "HSP") of the β-1,3-glucan ester derivative and the HSP of the solvent.

The HSP is an index indicating solubility characteristics and proposed by Hansen et al., which is represented by a multidimensional vector (dispersion term (dD), polarity term (dP), hydrogen bond term (dH)). HSP data on commonly used substances are available with reference to published databases. Known methods may be used to calculate the HSP of a certain substance which is not present in the database. For example, the HSP of each of multiple solvents in which the β-1,3-glucan ester derivative is soluble may be plotted in the three-dimensional HSP space. In this case, the coordinates of the plots for the solvents tend to be approximate to one another and tend to gather in a sphere-like shape. The HSP of a specific substance, such as the β-1,3-glucan ester derivative, may be defined as the center of such a sphere (solubility sphere). The radius (R0) of the solubility sphere is called the interaction radius. The calculation of HSP may be performed using computer software, such as Hansen Solubility Parameters in Practice (HSPiP).

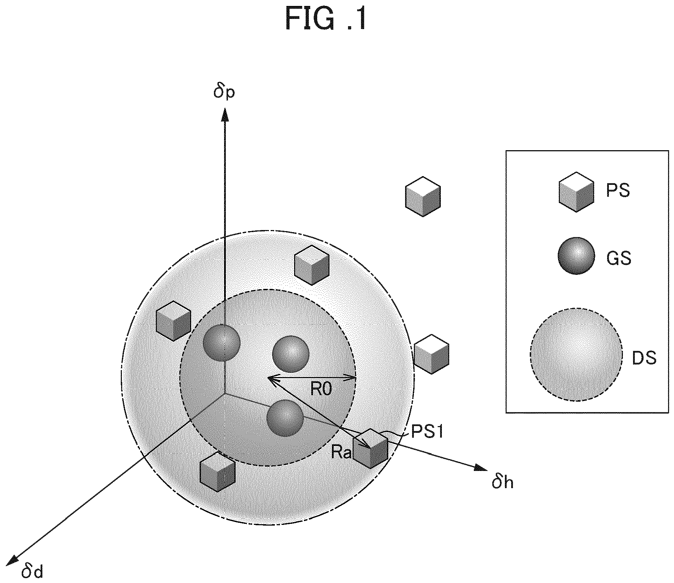

FIG. 1 is a diagram schematically showing the relationship between the HSP of the β-1,3-glucan ester derivative and the HSP of solvents for the β-1,3-glucan ester derivative in the HSP space. In FIG. 1, DS shown by the broken line indicates the circumference of the solubility sphere of the β-1,3-glucan ester derivative, the center of the solubility sphere indicates the HSP of the β-1,3-glucan ester derivative, and R0 indicates the radius of the solubility sphere. In FIG. 1, GS indicates the HSP of solvents in each of which the β-1,3-glucan ester derivative is soluble. In FIG. 1, PS indicates the HSP of solvents in each of which the β-1,3-glucan ester derivative is insoluble.

For example, the reprecipitation solvent is prepared such that the distance (Ra) between the HSP of the β-1,3-glucan ester derivative and the HSP of the solvent for the β-1,3-glucan ester derivative, which includes the reprecipitation solvent, is 1 to 2 times the radius (R0) of the solubility sphere. For example, FIG. 1 shows a case in which the HSP of the solvent for the β-1,3-glucan ester derivative, which includes the reprecipitation solvent, is represented by PS1. In this case, the reprecipitation solvent is prepared such that the distance Ra between PS1 and the HSP of the β-1,3-glucan ester derivative is 1 to 2 times R0. In FIG. 1, the portion at which Ra is 2 times R0 is indicated by the dash-dot-dash line. In FIG. 1, the region between the broken line and the dash-dot-dash line satisfies the condition that Ra is 1 to 2 times R0. When the solvent satisfies the condition, the precipitate containing the β-1,3-glucan ester derivative is gradually precipitated without precipitating rapidly in the precipitation step. As a result, the precipitated product is obtained in the form of fine particles without forming aggregates. This suppresses impurity inclusion and improves the handleability of the product during a later process.

The HSP of the solvent for the β-1,3-glucan ester derivative may be calculated on the basis of the HSP of each of the components of the solvent including the good and poor solvents in the reprecipitation solvent and the acid in the synthetic reaction liquid and the mixing ratio between the components. The calculation may also be performed using known computer software. The HSP of the solvent for the β-1,3-glucan ester derivative may be adjusted, for example, by changing the mixing ratio between the good and poor solvents in the reprecipitation solvent.

### Cooling Step

A cooling step is a step for lowering the temperature of at least one selected from the synthetic reaction liquid and the reprecipitation solvent. For example, the cooling step may include cooling at least one selected from the synthetic reaction liquid and the reprecipitation solvent before the mixing of the synthetic reaction liquid and the reprecipitation solvent in the precipitation step. Alternatively, the cooling step may include cooling a mixture solution obtained by mixing of the synthetic reaction liquid and the reprecipitation solvent in the precipitation step. The cooling step improves the yield of the β-1,3-glucan ester derivative.

### Washing Step

A washing step is a step for washing the precipitate including the β-1,3-glucan ester derivative obtained in the precipitation step. The washing step removes impurities, such as the acids used for esterifying, from the precipitate. The washing step may be performed using any appropriate solution in which the β-1,3-glucan ester derivative is less soluble and preferably in which the esterifying acid has high solubility. The washing step may be performed using any known methods.

The β-1,3-glucan ester derivative purified by the purification method according to the embodiment may be molded by any of various molding methods. Examples of suitable molding methods include injection molding, casting, compression molding, inflation molding, and other commonly used methods. The resulting molded product may be used for various applications, such as caps for kitchen faucet cartridges and other faucet cartridges.

The embodiments described above are not intended to limit the present disclosure and may be altered or modified as long as the object of the present disclosure can be achieved, and such altered or modified versions will fall within the scope of the present disclosure.

### EXAMPLES

Hereinafter, the present disclosure will be described in more detail with reference to examples, which are not intended to limit the present disclosure.

### Example 1

Propionic acid and hexanoic acid were used for esterification of a β-1,3-glucan. Propionic acid (2.5 L) and hexanoic acid (2.5 L) were added to a vessel and stirred at room temperature. Trifluoroacetic anhydride (5.0 L) was then added little by little to the resulting mixture with stirring for 30 minutes to prepare an acid mixture. Paramylon (1,000 g dried), a β-1,3-glucan, was added little by little to the acid mixture and esterified under stirring at 60°C for 2 hours to prepare a synthetic reaction liquid.

After the synthetic reaction liquid was cooled to room temperature, acetone (7.5 L) for serving as a good solvent was added to the synthetic reaction liquid. A mixed solution (6.25 L) of acetone and water (in a volume ratio of acetone to water of 1:4) was then added as a poor solvent to the resulting mixture to precipitate the paramylon ester. The resulting precipitate was then collected by filtration under reduced pressure. The collected precipitate was added to a mixed solution of acetone and water (in a volume ratio of acetone to water of 8:2). The mixture was stirred and then subjected to filtration under reduced pressure so that the paramylon ester precipitate was washed. The washing was repeated until the pH of the filtrate reached 7.

After the resulting precipitate was dried by heating at 100°C, methanol (28 L) was added to the dried precipitate. The resulting mixture was stirred at 60°C until the precipitate was completely dissolved. The solution was then cooled to room temperature. A mixed solution of methanol and water (in a volume ratio of methanol to water of 7:3) was added to the resulting solution, and the resulting precipitate was subjected to washing by way of filtration under reduced pressure until the pH of the filtrate reached 7, so that a purified product of the paramylon ester was obtained. The purified product was then dried by heating at 100°C to obtain a powder of the purified product (1,612 g).

### Example 2

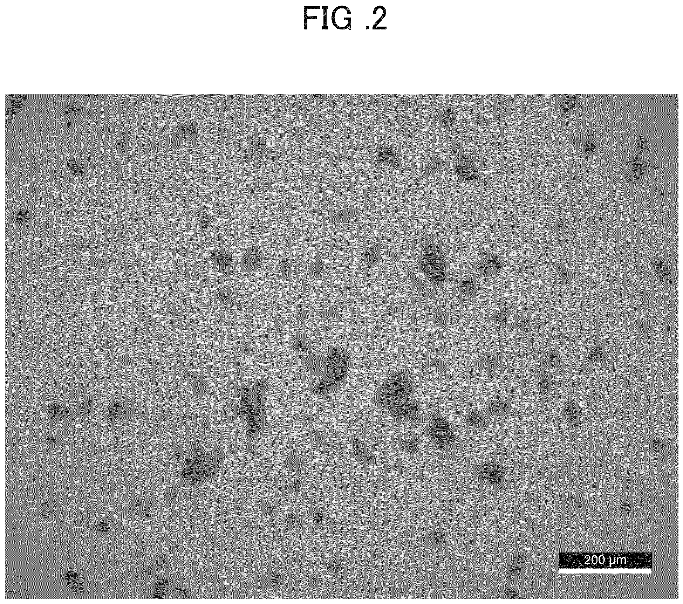

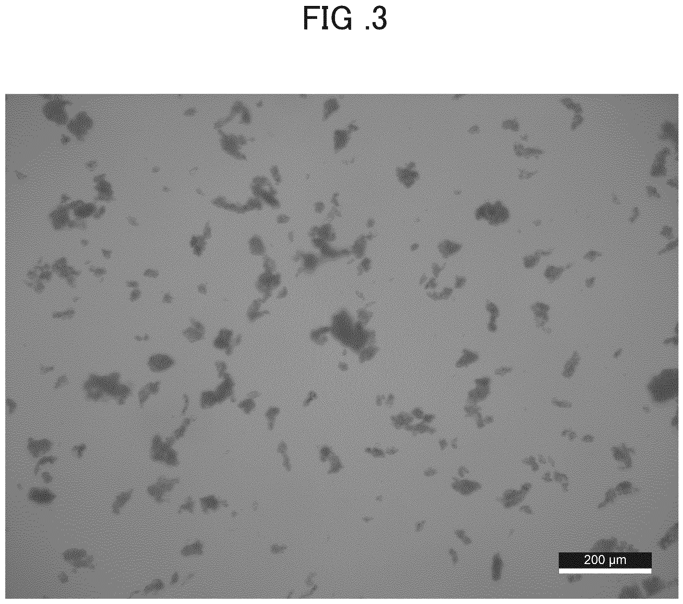

Propionic acid (1.5 L) and hexanoic acid (1.5 L) were used for esterification, and trifluoroacetic anhydride (3.0 L) was used as an additional acid. Paramylon (600 g dried), a β-1,3-glucan, was used. A mixed solution (160 mL) of acetone and water (in a volume ratio of acetone to water of 3:1) was used as a reprecipitation solvent. The resulting precipitate was dried by heating at 100°C and then subjected to the washing step after being dissolved in methanol (17 L). A powder of the purified product (943 g) was obtained as in Example 1 except for the above conditions. FIGS. 2 and 3 are micrographs showing the obtained powder.

### Example 3

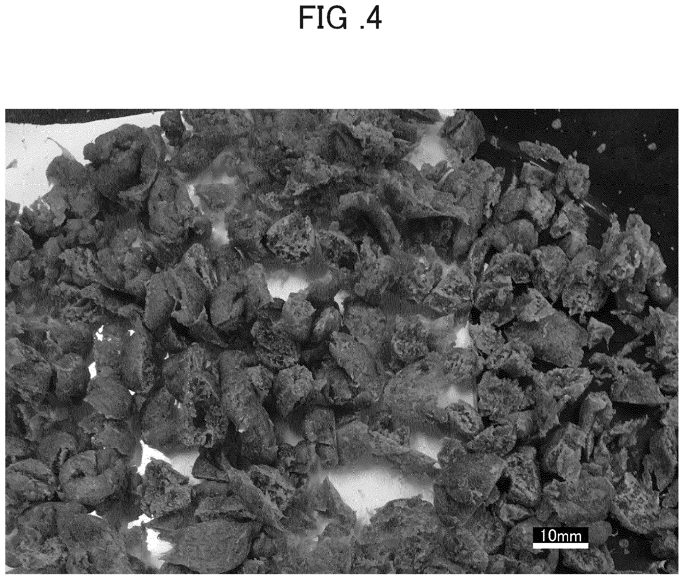

Propionic acid (4 L) and hexanoic acid (4 L) were used for esterification, and trifluoroacetic anhydride (8 L) was used as an additional acid. Paramylon (200 g dried), a β-1,3-glucan, was used. The esterification was carried out by adding paramylon to the acid mixture prepared above and stirring at 50°C for 2 hours. A mixed solution of methanol and water (in a volume ratio of methanol to water of 9:1) was used as a reprecipitation solvent. The conditions other than the above were the same as in Example 1. The resulting precipitate (440 g) was in the form of aggregates, which were cluster as shown in the photograph of FIG. 4.

### Example 4

Propionic acid (10 mL) and hexanoic acid (10 mL) were used for esterification, and trifluoroacetic anhydride (20 mL) was used as an additional acid. Paramylon (4 g dried), a β-1,3-glucan, was used. A mixed solution (80 mL) of acetone and water (in a volume ratio of acetone to water of 4:1) was added to the resulting synthetic reaction liquid. Unfortunately, no precipitate was obtained.

### H¹NMR Analysis

The purified products obtained in Examples 1, 2, and 3 were subjected to H¹NMR analysis and the degree of substitution of the β-1,3-glucan was calculated. The β-1,3-glucan has three esterifiable hydroxy groups per six-membered ring. The average number of hydroxy groups substituted with propionic acid per six-membered ring was determined as the degree of substitution with propionic acid (DsPr). In a similar way, the average number of hydroxy groups substituted with hexanoic acid per six-membered ring was determined as the degree of substitution with hexanoic acid (DsHe). The results are shown in Table 1.

### Molecular Weight Measurement

The weight-average molecular weight (Mw) of each of the purified products obtained in Examples 1, 2, and 3 was measured, and the molecular weight dispersivity (Mw/Mn) was calculated. The results are shown in Table 1.

### Calculation of R0 and Ra

The paramylon ester obtained in each of Examples 1, 2, and 3 had a solubility sphere radius R0 of 9.2. The HSP of each of the solvents used in Examples 1, 2, 3, and 4 was calculated by weight-averaging the HSP values (known) of propionic acid, hexanoic acid, trifluoroacetic acid, methanol, acetone, and water. The distance Ra between each calculated HSP and the HSP of the paramylon ester was calculated. Ra/R0 was further calculated, which indicated how many times Ra is greater than the solubility sphere radius R0. The results are shown in Table 1.

**[Table 1]**

| | Example 1 | Example 2 | Example 3 | Example 4 |
|---|---|---|---|---|
| DsPr | 1.71 | 1.75 | 1. 68 | - |
| DsHe | 1.29 | 1.25 | 1.32 | - |
| Mw | 360000 | 332000 | 630000 | - |
| Mw/Mn | 2.10 | 1.93 | 2.10 | - |
| Ra | 16.0 | 9.2 | 19.3 | 8.8 |
| Ra/R0 | 1.74 | 1.00 | 2.10 | 0.96 |

As shown in Table 1, the purification methods according to Examples 1 and 2 in which Ra was 1 to 2 times the solubility sphere radius R0 were found to produce a purified product in the form of fine particles as shown in FIGS. 2 and 3. The purification method according to Example 3 in which Ra was more than 2 times the solubility sphere radius R0 was found to produce a purified product in the form of aggregates as shown in FIG. 4. The purification method according to Example 4 in which Ra was less than 1 times the solubility sphere radius R0 was found to produce no precipitate. Therefore, it has been demonstrated that the precipitation state of the purified product can be controlled by preparing a reprecipitation solvent based on the relationship between the HSP of the solvent and the HSP of the β-1,3-glucan ester derivative.

## Claims

1. A method for purifying a β-1,3-glucan ester derivative, the method comprising a precipitation step for mixing a reprecipitation solvent and a synthetic reaction liquid comprising the β-1,3-glucan ester derivative produced by esterification of at least some of hydroxy groups in a β-1,3-glucan with an acid,
wherein the reprecipitation solvent is prepared based on a relationship between a Hansen solubility parameter of the reprecipitation solvent and a solubility sphere for a Hansen solubility parameter of the β-1,3-glucan ester derivative.

2. The method according to claim 1,
wherein the reprecipitation solvent is prepared such that a distance Ra between a Hansen solubility parameter of a solvent for the β-1,3-glucan ester derivative comprising the reprecipitation solvent and the Hansen solubility parameter of the β-1,3-glucan ester derivative is 1 to 2 times the radius R0 of the solubility sphere for the Hansen solubility parameter of the β-1,3-glucan ester derivative.

3. The method according to claim 1 or 2,
wherein the precipitation step comprises adding the reprecipitation solvent to the synthetic reaction liquid.

4. The method according to claim 3,
wherein the reprecipitation solvent consists of a good solvent in which the β-1,3-glucan ester derivative has high solubility and a poor solvent in which the β-1,3-glucan ester derivative has low solubility, and the precipitation step comprises adding the good solvent to the synthetic reaction liquid and then adding the poor solvent to the mixture.

5. The method according to any one of claims 1 to 4, further comprising a cooling step for lowering a temperature of at least one selected from the synthetic reaction liquid and the reprecipitation solvent.

6. The method according to any one of claims 1 to 5, wherein the β-1,3-glucan ester derivative is a curdlan ester derivative or a paramylon ester derivative.

7. A β-1,3-glucan ester derivative purified by the method for purifying the β-1,3-glucan ester derivative according to any one of claims 1 to 6.
